# EUROPEAN PATENT APPLICATION

(11) **EP 1 166 846 A1**
(43) Date of publication of application: **02.01.2002**
(21) Application number: 00500132.6
(22) Date of filing: 22.06.2000
(51) Int. Cl.: B01D 53/14, C02F 1/28

(54) **"Procedure for the treatment of gases and residues in sewage and composition plants"**

(71) Applicant: Martinez Martinez, Jose, 08330 Premia de Mar (ES)
(72) Inventor: Martinez Martinez, Jose, 08330 Premia de Mar (ES)
(74) Representative: Marques Alos, Fernando

(57) **Abstract**

**"PROCEDURE FOR THE TREATMENT OF GASES AND RESIDUES IN SEWAGE AND COMPOSTING PLANTS"**, of the type used in the treatment of urban sewage and industrial effluent, consisting in a treatment of the gases generated in purification plants and water lines, characterised because the gases are recirculated through active media in series; in the first medium is a solution of liposomes which react with the molecules of odorous substances, capturing them and forming groupings; subsequently the gases are relayed to a second active medium, which incorporates as an active substance a natural essential oil with bactericidal and fungicidal properties; finally the gases are conducted to a third active medium composed of a mixture of reactive aromatic materials which combine with the gas before its outlet to the exterior of the plant, while for the elimination of the heavy metals from the water in the plant, it is made to pass through an active medium on the basis of liposomes, which will effect the fixing of these metals before they pass to the sludge line.

## Description

The object of the present invention, as is expressed in the descriptive summary of this memorandum, consists in a "**PROCEDURE FOR THE TREATMENT OF GASES AND RESIDUES IN SEWAGE AND COMPOSTING PLANTS**", of the type principally employed for urban sewage and industrial effluent.

The treatment of sewage and effluent is increasing more and more due to the growing awareness of society in favour of the maintenance of an environment as little contaminated as possible.

The increase in water pollution is closely related on the one hand with the tremendous development going on in industry, and on the other with the high concentration of population which crowds the cities.

Basically, in general terms, water purification starts with a first stage of refinement where the solids which may be carried along by the water to be purified are separated out by physical means.

This is followed by a primary treatment, where the water is put into a sedimentation tank, leaving it to rest for a certain length of time so that any solid particles can separate out by gravity, forming a sediment.

Next comes the secondary treatment, which can be a physical-chemical or biological treatment.

In the case of the biological secondary treatment, more used than the physical-chemical, colonies of bacteria are used to break down the organic material.

In the case of the physical-chemical secondary treatment, the water is treated with some chemical substance which allows precipitation of the organic material.

Both the primary and secondary treatments lead to sludge lines which, before being deposited in the landfill dumps or similar, go through a drying process.

However, these treatments, although they generally offer a fairly good return in purification, suffer from the certain drawbacks, such as the emission of odours due to the breakdown of the organic material, or the insufficient purification of dioxins and heavy metals.

The object of the novel patent is to develop a new process to solve the environmental problems which are generated in the treatment of sewage and effluent:

The fixing and purification of gases before their release to the atmosphere.

The fixing and capture of the metals in effluent and sewage before they reach the sludge. For this purpose the capture will be made on the basis of liposomes. The liposome is a structure of a double layer, similar to the cell membranes of mammals, formed basically of phospholipids whose amphipathic nature permits the formation of double-layered structures.

When phospholipids are exposed to water, the fatty acid chains associate together, excluding the water. Simultaneously the polar groups associate together around the aqueous phase, carrying out the formation of the double layer. In this way, the highly polar products, soluble in water, remain trapped and encapsulated in the interior watery compartment; the lipophilics interweave into the liposome membrane and form part of it, while the amphipathics are located in between the membrane-aqueous interphase.

The intrinsic capacity of liposomes to transport or capture different molecules of very disparate physical and chemical characteristics has been explored in various laboratories and industries such as the cosmetic and pharmaceutical.

Basically, the novel procedure for the treatment of sewage and effluent comprises a specific treatment of the gases generated in the primary and secondary treatments, in order to eliminate the odours, and a treatment of the water line for the improved purification of metals and dioxins.

In the treatment of gases, these are recirculated through some active media, which can consist of tanks containing the active medium with the gas to be dealt with bubbling through, or in cartridges impregnated with the active medium.

The active medium is formed from a solution of liposomes, which can be, without distinction, uni-lamellar or multi-lamellar.

This treatment for the gases consists of three different active media in series, through which the gases generated in the purification pass. In the first medium there is a solution of liposomes which react with the molecules of odorous substances, fixing them and forming groupings which can be retained through physical or chemical methods and specifically filtered out from the gases generated in the installation.

Once the gases have passed through the first active medium, they are led to the second medium, which incorporates as an active substance an essential oil with bactericidal and fungicidal properties, and a deodorising action, eliminating the bad odours produced by the gaseous particles generated in the purification.

These products can be biodegradable products, based on plant extracts obtained by simple distillation.

The gases are subsequently led to a third active medium composed of a mixture of reactive odorous materials which combine with the gases under treatment. These materials could be considered as sub-perfumes, or materials containing some of the basic components used in the perfume industry, preferably with components which contribute the smells of mountains, freshness, seaside, etc.

This medium achieves the production of a sensation of pure air in the immediate vicinity of the sewage and composting treatment plant.

At the same time, the new procedure for treatment of sewage and effluent presents an additional process for treatment of the water line, through technology based on liposomes.

This process is characterised by recirculating the water in the plant, whether at the beginning, after the first or second treatment, or at the discharge, through a filtering medium on the basis of liposomes. These will be used to effect the capture of heavy metals before these pass to the sludge line.

The active medium can consist of a tank in which solution based on unsaturated liposomes comes into contact with the water line.

This filtering medium will be discontinuous, the liposomes having to be extracted when they become saturated and the active medium regenerated.

With this novel procedure for the treatment of sewage and effluent, the bad odours generated in water purification plants are completely eliminated.

At the same time, we achieve, in a completely novel way, the fixing of the metals in sewage and effluent before they reach the sludge.

### DESCRIPTION OF THE DRAWINGS

With the object of illustrating what has been set out above, there is attached to this document, forming an integral part of it, a sheet of drawing representing in a simplified and schematic manner an example of the operation, merely for illustrative purposes and in no way limiting of the practical possibilities of the invention.

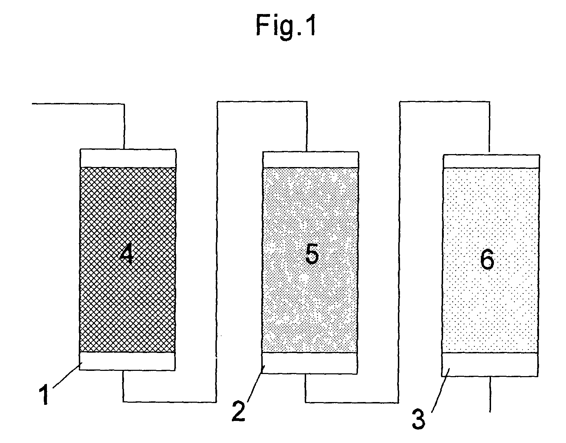

In these drawings, fig. 1 corresponds to a schematic view of the phases of the process of purification of the gases from the sewage treatment plant.

### DESCRIPTION OF A PRACTICAL CASE

The new procedure for purification in sewage and effluent treatment plants is constituted by a treatment of the gases generated in the different phases, and a treatment for the water line, both complementary to the normal treatments.

In the treatment of the gases generated, these are recirculated through some active media, which can be tanks containing the active medium with the gas to be treated bubbling through, or cartridges the content of which is impregnated with the active medium.

This treatment of gases consists of three different active media arranged in series.

In the first medium (1) there is a solution of liposomes (4) which react with the molecules of odorous substances, capturing them and forming groupings which can be retained through physical or chemical methods and specifically filtered out from the gases generated in the installation.

The active medium is formed of a solution of liposomes (4) which can be uni-lamellar or multi-lamellar.

Once the gases have passed through the first active medium, they are led to the second medium (2), which incorporates as an active substance a natural bactericidal and fungicidal oil (5), and also has a deodorising action, eliminating the bad odours produced by the gaseous particles generated in the purification.

These products can be biodegradable products, based on plant extracts obtained by simple distillation.

The gases are subsequently led to a third active medium (3), composed of a mixture of interactive odorous materials (6) which associate themselves with the gas under treatment. These materials can be considered as sub-perfumes, or materials containing some of the basic components used in the perfume industry, preferably with components which contribute the smells of mountains, freshness, seaside, etc.

The treatment of the water line is carried out through technology based on liposomes. This process is characterised by recirculating the water line of the plant, whether at the start, after the first or second treatment, or at its discharge, to a filtering medium on the basis of liposomes, in discontinuous operation. These will be used to effect the capture of heavy metals before these pass to the sludge line, and they will need to be extracted by a physical or chemical process when they become saturated and the active medium regenerated.

Having established the concept expressed, hereunder is set out the note of claims, thus summarising the new art which it is wished to claim.

## Claims

1. **PROCEDURE FOR THE TREATMENT OF GASES AND RESIDUES IN SEWAGE AND COMPOSTING PLANTS,** of the type employed principally in the treatment of urban sewage and industrial effluent, consisting in the specific treatment of the gases generated in the purification plants and the water line, **characterised** essentially because the procedure is the recirculation of the gases generated in the purification through some active media in series; in the first medium there is a solution of liposomes which react with the molecules of the odorous substances, capturing them and forming groupings which can be retained through physical or chemical methods and filtered out from the gases generated in the installation; such liposomes being, without distinction, uni-lamellar or multi-lamellar; the gases are then led to a second active medium which incorporates as an active substance a natural essential oil with bactericidal and fungicidal properties; finally the gases are led to a third active medium composed of a mixture of reactive odorous materials which associate themselves with the gas under treatment for its release to the exterior of the plant.

2. **PROCEDURE FOR THE TREATMENT OF GASES AND RESIDUES IN SEWAGE AND COMPOSTING PLANTS, characterised** because it deals with an additional process for the treatment of the water line, using technology on the basis of liposomes, **characterised** essentially through recirculating the water line of the plant, whether at the beginning, after the first or second treatments or at its discharge, to an active medium based on liposomes which will effect the capture of the heavy metals before they pass to the sludge line.

3. **PROCEDURE FOR THE TREATMENT OF GASES AND RESIDUES IN SEWAGE AND COMPOSTING PLANTS,** in accordance with Claim 2, **characterised** because the active medium can consist in a tank where a solution on a basis of unsaturated liposomes comes into contact with the water line, working discontinuously, having to proceed to the extraction of the liposomes by precipitation when they become saturated and the consequent regeneration of the active medium.

4. **PROCEDURE FOR THE TREATMENT OF GASES AND RESIDUES IN SEWAGE AND COMPOSTING PLANTS,** in accordance with Claim 2, **characterised** because the active medium can consist in a cartridge with a filtering support impregnated with unsaturated liposomes through which the water line is made to pass, being duly regenerated when these liposomes are saturated.

5. **PROCEDURE FOR THE TREATMENT OF GASES AND RESIDUES** **IN SEWAGE AND COMPOSTING PLANTS,** according to Claim 1, **characterised** because the first active medium of the treatment of the gases generated can consist of a tank where the active medium is contained and the gas to be dealt with is bubbled through, or in place of this the use of cartridges impregnated with the active medium.

6. **PROCEDURE FOR THE TREATMENT OF GASES AND RESIDUES IN SEWAGE AND COMPOSTING PLANTS,** following the above claim, **characterised** because the saturated liposomes are extracted from the active medium by precipitation in the case of being placed in a tank with bubbling, or if using filter cartridges, by replacement of the filter support.

7. **PROCEDURE FOR THE TREATMENT OF GASES AND RESIDUES IN SEWAGE AND COMPOSTING PLANTS,** in accordance with Claim 1, **characterised** because the second active medium for the treatment of the gases generated, using an the essential natural oil which is bactericidal and fungicidal, has at the same time a deodorant function.

8. **PROCEDURE FOR THE TREATMENT OF GASES AND RESIDUES IN SEWAGE AND COMPOSTING PLANTS**, in accordance with Claim 1, **characterised** because the third active medium for the treatment of the gases generated incorporates materials which contain some of the basic components used in the perfume industry, preferably components which supply natural odours, such as mountain, freshness, sea, etc.
